# EUROPÄISCHE PATENTSCHRIFT

(11) **EP 2 760 574 B1**
(45) Veröffentlichungstag und Bekanntmachung des Hinweises auf die Patenterteilung: **01.02.2017**
(21) Anmeldenummer: 12786808.1
(22) Anmeldetag: 25.09.2012
(51) Int. Cl.: B01F 17/00, C03C 17/25

(54) **STABILE NANOPARTIKULÄRE SUSPENSION UND VERFAHREN ZUR HERSTELLUNG**
STABLE NANOPARTICULAR SUSPENSION AND METHOD FOR PRODUCING SAME
SUSPENSION NANOPARTICULAIRE STABLE ET PROCÉDÉ DE FABRICATION DE LADITE SUSPENSION NANOPARTICULAIRE

(30) Priorität: 27.09.2011 DE 102011114363
(43) Veröffentlichungstag der Anmeldung: 06.08.2014
(73) Patentinhaber: KRONOS INTERNATIONAL, INC., 51373 Leverkusen (DE)
(72) Erfinder: METZ, Ina, 40699 Erkrath (DE); SCHEIDT, Christian, 48157 Münster (DE); BLÖSS, Stephan-Peter, 51399 Burscheid (DE)
(86) Internationale Anmeldenummer: PCT/EP2012/003996
(87) Internationale Veröffentlichungsnummer: WO 2013/045071

(56) Entgegenhaltungen:
- EP-A1- 1 052 225
- WO-A1-2010/110726
- WO-A2-2006/010438
- DE-A1-102006 057 903

## Beschreibung

### Gebiet der Erfindung

Die Erfindung betrifft eine stabile hochkonzentrierte wässrige Suspension von Nanopartikeln, insbesondere von Titandioxidpartikeln, ein Verfahren zur Herstellung und die Verwendung der Suspension beispielsweise als Beschichtung oder Imprägnierung oder als Additiv in organischen oder anorganischen Matrizes.

### Technologischer Hintergrund der Erfindung

Nanopartikel (Partikelgröße typischerweise <100 nm) besitzen als Nanoadditive ein großes Innovationspotential, beispielsweise in Beschichtungen, Kunststoffen, optischen Artikeln, Elektronik, Keramik, Spezialchemikalien etc. Die Nanopartikel können dabei verschiedene Funktionen haben, beispielsweise als Photokatalysator, UV-Absorber, Abrasionsschutz, Füllstoff oder zur Oberflächenfunktionalisierung.
Aufgrund der geringen Partikelgröße und der starken Agglomerationsneigung ist eine Verarbeitung und Anwendung von Nanopartikeln im trockenen Zustand als Pulver meist nicht möglich. Alternativ werden deswegen wasser- oder lösemittel-basierte Dispersionen (Suspensionen) der Nanopartikel hergestellt, wobei die Partikel mit verschiedenen Technologien deagglomeriert und dispergiert werden. Entscheidend ist allerdings, dass ein sehr guter und stabiler Dispergierzustand erreicht wird, um den Vorteil der Nanoadditive gegenüber den bekannten mikropartikulären Additiven in der Anwendung nutzen zu können. Wird die nanopartikuläre Suspension beispielsweise als Beschichtung auf ein Substrat aufgebracht, spielt die Transparenz der Suspension eine wichtige Rolle.

Zahlreiche Verfahren zur effektiven Dispergierung von Nanopartikeln in verschiedenen Dispersionsmedien wurden bereits entwickelt, beispielsweise Mischen mit hoher Scherrate, Ultraschallbehandlung oder verschiedene Aufmahltechnologien. Daneben sind verschiedene Dispergiermittel und andere Additive bekannt, die vorteilhaft in einer nanopartikulären Suspension eingesetzt werden können.
Die DE 10 2004 037 118 A1 offenbart beispielsweise ein Verfahren zur Herstellung einer wässrigen Suspension von nanoskaligen Titandioxidpartikeln mit einer Konzentration von mindestens 20 Gew.-%, wobei als Dispergiermittel ein Aminoalkohol und eine Carbonsäure eingesetzt werden und nach einer Vordispergierung eine Vermahlung in einer Hochenergiemühle stattfindet.
Gemäß WO 2010/110726 A1 werden als Dispergiermittel Amine oder Glykole verwendet, und die Suspension wird in einer Perlmühle mit Mahlkörpern spezifizierter Größe vermahlen.

Bei den bekannten Verfahren tritt häufig während oder nach der Dispergierung mit hohen Scherraten beispielsweise in einer Rührwerkskugelmühle ein deutlicher Viskositätsanstieg auf, der eine weitere Verarbeitung erschwert.

### Aufgabenstellung und Kurzbeschreibung der Erfindung

Aufgabe der Erfindung ist es, eine stabile wässrige Suspension von Nanopartikeln mit Feststoffkonzentrationen von bis über 50 Gew.-% bereitzustellen, die einfach und kostengünstig herzustellen ist und auch bei hohen Scherraten keinen signifikanten Viskositätsanstieg zeigt.

Die Aufgabe wird gelöst durch eine wässrige Suspension von nanoskaligen anorganischen Partikeln, in der ein erstes Dispergiermittel auf Basis eines polymeren Alkoxylats und ein zweites Dispergiermittel aus der Gruppe der Aminoalkohole enthalten sind.

Die Aufgabe wird des Weiteren gelöst durch ein Verfahren zur Herstellung einer wässrigen Suspension von nanoskaligen anorganischen Partikeln dadurch gekennzeichnet, dass ein Dispergiermittel auf Basis eines polymeren Alkoxylats und ein weiteres Dispergiermittel aus der Gruppe der Aminoalkohole zugesetzt werden.

Weitere vorteilhafte Ausführungsformungen der Erfindung sind in den Unteransprüchen beschrieben.

### Beschreibung der Erfindung

Alle im Folgenden offenbarten Angaben bezüglich pH-Wert, Temperatur, Konzentration in Gew.-% oder Vol.-% usw. sind so zu verstehen, dass alle Werte, die im Bereich der dem Fachmann bekannten jeweiligen Messgenauigkeit liegen, mit umfasst sind.
Als nanopartikuläre Suspension wird im Folgenden die Verteilung von Nanopartikeln (gemäß ISO/TS 80004-1) in einer flüssigen Phase bezeichnet.

Als nanoskalige anorganische Partikel sind im Prinzip alle Arten von natürlichen oder synthetischen nanoskaligen anorganischen Partikel geeignet, bevorzugt Metalloxide, -sulfide, -sulfate, -phosphate, -silikate oder -aluminate. Besonders bevorzugt sind nanoskalige Metalloxide, insbesondere Photohalbleiter. In einer besonderen Ausführung der Erfindung werden nanoskalige Titandioxidpartikel eingesetzt.

Die erfindungsgemäße Suspension zeichnet sich dadurch aus, dass die Stabilität der Suspension auch bei und nach starker Dispergierung beispielsweise in einer Rührwerkskugelmühle erhalten bleibt. Erfindungsgemäß tritt unter Einwirkung hoher Scherkräfte keine Viskositätserhöhung auf. In einer besonderen Ausführung der Erfindung tritt in Abhängigkeit von der Mahldauer eine signifikante Verringerung der Viskosität um bis zu 10 bis 50% auf.

Erfindungsgemäß wird ein erstes Dispergiermittel auf Basis eines polymeren Alkoxylats verwendet. Unter Alkoxylaten sind die Salze eines alkalischen (Poly-)Alkohols zu verstehen. Sie liegen in der Form (RO)ₙMe (n = Wertigkeit des Metalls Me) vor und wandeln sich je nach pH-Wert in wässrigen Medien zumindest teilweise zu den entsprechenden Alkoholen und Metallionen um. Häufig verwendete Metalle sind die Alkali- und Erdalkalimetalle Na, K, Mg, Ca. Bevorzugt werden Phosphatfunktionalisierte Alkoxylate verwendet. Besonders geeignet ist der Einsatz des Dispergiermittels Solplus D540 oder D541 des Herstellers Lubrizol.

Erfindungsgemäß wird desweiteren ein zweites Dispergiermittel aus der Gruppe der Aminoalkohole zugegeben. Geeignet sind beispielsweise 2-Amino-2-Methyl-1-Propanol (AMP) oder 2-Amino-2-Ethyl-1,3-Propan-Diol (AEP).

Die Gesamtmenge der zugegebenen Dispergiermittel liegt vorteilhafterweise im Bereich von etwa 3 bis 40 Gew.-% bezogen auf Nanopartikel, bevorzugt bei 10 bis 30 Gew.-% und insbesondere bei 15 bis 25 Gew.-%.

In einer besonderen Ausführung der Erfindung werden das erste und das zweite Dispergiermittel zur Erzielung einer optimalen Viskosität der Suspension aufeinander abgestimmt. Beispielsweise werden optimale Ergebnisse bei Verwendung der Kombination Solplus D540 (erstes Dispergiermittel) und AMP (zweites Dispergiermittel) bzw. bei der Kombination Solplus D541 (erstes Dispergiermittel) und AEP (zweites Dispergiermittel) erzielt. Möglicherweise werden optimale Ergebnisse dann erzielt, wenn zwischen den verwendeten Dispergiermitteln keine Vernetzung erfolgt.

Der Gehalt an nanoskaligen Partikeln in der erfindungsgemäßen Suspension beträgt bevorzugt bis zu 70 Gew.-%, insbesondere 30 bis 60 Gew.-% und insbesondere bevorzugt 40 bis 50 Gew.-% bezogen auf Suspension.

Optional können neben dem erfindungsgemäßen Dispergiermittel weitere übliche Additive verwendet werden wie Lösemittel, Entschäumer, Rheologieadditiv (Anti-Absetzmittel), Topfkonservierer (Biozid), etc.

Die Herstellung der erfindungsgemäßen Suspension erfolgt bevorzugt in zwei Schritten, wobei zunächst mit einem Dissolver vordispergiert und anschließend in einer Rührwerkskugelmühle dispergiert wird. Beispielsweise werden Wasser, das erfindungsgemäße Dispergiermittel und optional die weiteren Additive vorgelegt und die nanoskaligen Partikel unter Rühren mit dem Dissolver zugegeben.
Die Rührzeit ist abhängig von der Feststoffkonzentration und Agglomerationsneigung der Nanopartikel und beträgt bevorzugt 30 bis 60 Minuten. Die Vordispersion muss eine pumpfähige Konsistenz aufweisen mit einer Viskosität von maximal 2000 mPa, bevorzugt <1200 mPa und insbesondere <1000 mPa.
Anschließend wird der pH-Wert eingestellt, bevorzugt ein pH-Wert von >4 in Abhängigkeit vom Anwendungssystem. Beispielsweise wird bei der späteren Verwendung der erfindungsgemäßen Suspension in Farb- und Lacksystemen ein pH-Wert von etwa 6 bis 8 eingestellt, während für die Verwendung in zementären Systemen ein pH-Wert von etwa 7 bis 10 eingestellt wird.

Anschließend erfolgt die Dispergierung in einer Rührwerkskugelmühle. Die Mahlperlen weisen bevorzugt eine Dichte von >3 g/cm³ auf, geeignet sind beispielsweise SAZ-Perlen oder Y-dotierte Zirkonperlen. Die Größe der Mahlperlen liegt bevorzugt im Bereich 0,1 bis 1,0 mm, besonders bevorzugt im Bereich von 0,1 bis 0,6 mm und insbesondere im Bereich von 0,1 bis 0,4 mm. In einer speziellen Ausführung der Erfindung werden Mahlperlen mit einer Größe im Bereich von 0,1 bis 0,2 mm verwendet.

In einer besonderen Ausführung der Erfindung weist die Suspension am Ende der Dispergierung eine mittlere Partikelgröße (d50) von etwa <150 nm, bevorzugt etwa <120 nm und insbesondere etwa <100 nm auf.

Die erfindungsgemäße Suspension ist stabil und setzt auch über einen Zeitraum von bis zu 3 Monaten nicht ab, d.h. es treten keine Serumsbildung und kein Bodensatz auf.
In einer besonderen Ausführung der Erfindung ist die erfindungsgemäße Suspension bei pH-Werten von mindestens 5, bevorzugt in einem pH-Wert-Bereich von 5 bis 8 und insbesondere in einem pH-Wert-Bereich von 7 bis 8 stabil.
Darüber hinaus weist die erfindungsgemäße Suspension eine hohe Transparenz auf, die durch eine verlängerte Dispergierzeit gesteigert wird.

In einer besonderen Ausführung der Erfindung kann der Suspension in einem weiteren Schritt das Wasser entzogen werden, beispielsweise durch thermische Behandlung bei etwa 50 bis 120°C. Die Trocknung kann entweder in üblicher Weise in einem Sprühtrockner oder einer Wirbelschicht erfolgen. Die erfindungsgemäße Suspension kann darüber hinaus auch auf einem Bandtrockner oder Etagentrockner getrocknet werden. In einer alternativen Ausführung der Erfindung kann die Suspension vakuumgetrocknet werden.
Bei der Trocknung entsteht ein staubfreies Granulat mit einer Feuchte von bevorzugt etwa <5 Gew.-%, insbesondere <1% Gew.-%. Das Granulat kann zu einem späteren Zeitpunkt in einer entsprechenden Menge Wasser oder in einem polaren Lösemittel redispergiert werden. Bei der Redispergierung entsteht nach kurzer Rührzeit von weniger als etwa 5 Minuten eine Suspension mit einem vergleichbaren Dispergierzustand wie die ursprüngliche Suspension.
Damit kann die getrocknete Dispersion wie ein Stir-in Pigment verwendet werden.

Die erfindungsgemäße Suspension ist geeignet zur Verwendung als Beschichtung oder Imprägnierung von anorganischen oder organischen Oberflächen wie Glas, Keramik, Metall, Holz usw. Die erfindungsgemäße Suspension kann weiterhin als Additiv in organischen oder anorganischen Matrizes wie Lack- und anderen Kunststoffsystemen oder beispielsweise in zementären Systemen wie Putzen oder Vorsatzbetonen verwendet werden.

### Beispiele

Im Folgenden ist die Erfindung beispielhaft beschrieben, ohne dass damit eine Einschränkung der Erfindung verbunden ist.

Es wurden Suspensionen folgender Zusammensetzungen hergestellt:

### Beispiel 1

| | |
|---|---|
| 1. VE-Wasser | 318,0 g |
| 2. Rheolate 420 (Rheologieadditiv) | 3,5 g |
| 3. Byk 023 (Entschäumer) | 2,0 g |
| 4. Solplus D540 (erstes Dispergiermittel) | 120,0 g |
| 5. Acticide IMS (Biozid) | 1,0 g |
| 6. AMP 90 (zweites Dispergiermittel) | 55,5 g |
| 7. nanoskaliges Titandioxid KRONOClean7000 | 500,0 g |
| gesamt | 1000,0 g |

### Beispiel 2

| | |
|---|---|
| 1. VE-Wasser | 402,2 g |
| 2. Laponite SL 25 (Rheologieadditiv) | 12,0 g |
| 3. Byk 023 (Entschäumer) | 2,0 g |
| 4. Solplus D541 (erstes Dispergiermittel) | 124,0 g |
| 5. Acticide IMS (Biozid) | 1,0 g |
| 6. AEPD VOX 1000 (zweites Dispergiermittel) | 58,8 g |
| 7. nanoskaliges Titandioxid KRONOClean7000 | 400,0 g |
| gesamt | 1000,0 g |

Das handelsübliche nanoskalige Titandioxidprodukt KRONOClean7000 ist pulverförmig und weist eine mittlere Partikelgröße (d50) von etwa 1,7 µm (gemessen mit dem Mastersizer 2000 von Malvern, volumenbasierte Partikelgrößenverteilung) und eine spezifische Oberfläche nach BET von etwa 240 m²/g auf.
Die Additive sind handelsüblich und liegen in den handelsüblichen Konzentrationen vor.

Die Komponenten 1 bis 6 wurden im Rührbehälter vorgelegt, das Titandioxidpulver wurde unter Rühren hinzugefügt. Die Vordispergierung mit dem Dissolver erfolgte 30 Minuten lang. Falls der pH-Wert anschließend unterhalb von 8 lag, wurde er mit dem zweiten Dispergiermittel auf 8 eingestellt. Abschließend wurde die Suspension mit einer Rührwerkskugelmühle unter folgenden Bedingungen dispergiert:
Das Mühlenvolumen betrug 125 ml, das Volumen der Mahlperlen (ZrO₂-Perlen, 0,4 bis 0,6 mm) betrug 100 ml inkl. Zwickelvolumen. Es wurde 1L Suspension bei 3000 bis 5000 U/min und 700 W Energieeintrag 10 Stunden dispergiert, wobei die Temperatur unter 50 °C gehalten wurde.

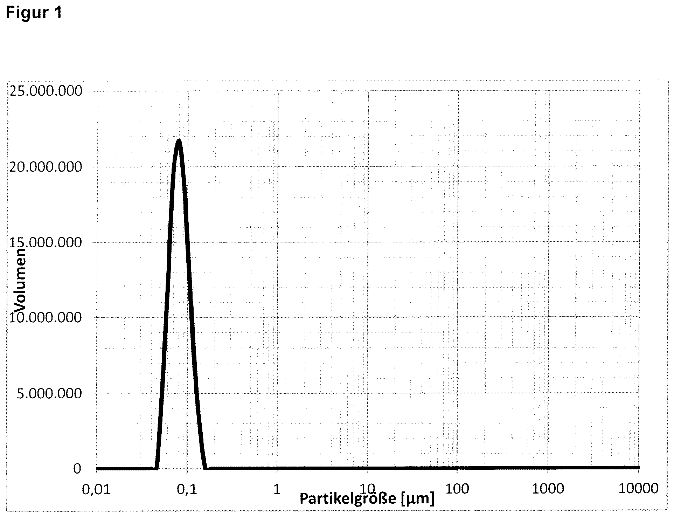

Die Partikelgrößenverteilung der dispergierten Suspensionen (Beispiel 1 und 2) wurde mit dem Mastersizer 2000 von Malvern gemessen und die mittlere Partikelgröße (d50), berechnet aus der volumenbasierten Partikelgrößenverteilung, zu etwa 86 nm bestimmt (siehe Figur 1).

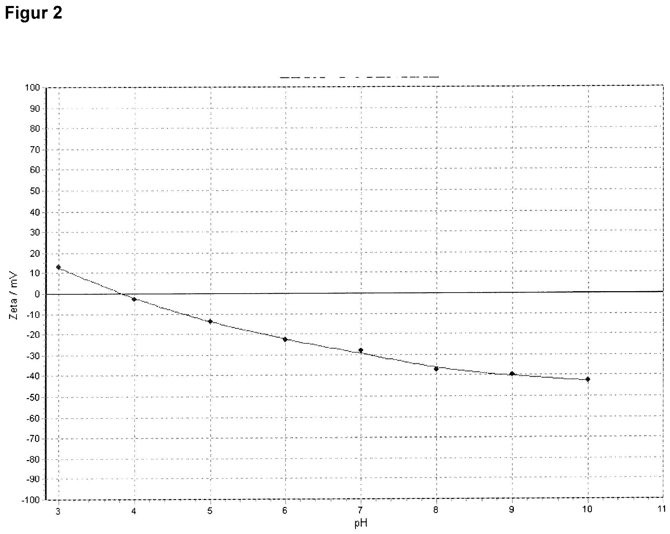

Figur 2 zeigt das Zetapotential der dispergierten Suspensionen (Beispiel 1 und 2) im pH-Wert-Bereich von 3 bis 10. Es zeigt sich, dass der isoelektrische Punkt bei einem pH-Wert von etwa 3,8 liegt und die Suspension in dem pH-Wert-Bereich von >5 hinreichend elektrisch stabilisiert ist.

Die Transparenz der Suspension wurde an einem Glasplattenaufzug aus 1 Teil Suspension und 4 Teilen Bindemittel (Bayhydrol A145) gemessen, wobei sich die Suspensionsrezeptur von Beispiel 1 lediglich dadurch unterschied, dass sie 10 Gew.-% Titandioxid KRONOClean 7000 enthielt. Die Nassfilmdicke betrug etwa 90 µm. Der Glasplattenaufzug wurde bei etwa 30°C getrocknet und die Transparenz mit dem Haze-Gard plus der Fa, Byk Gardner gemessen.

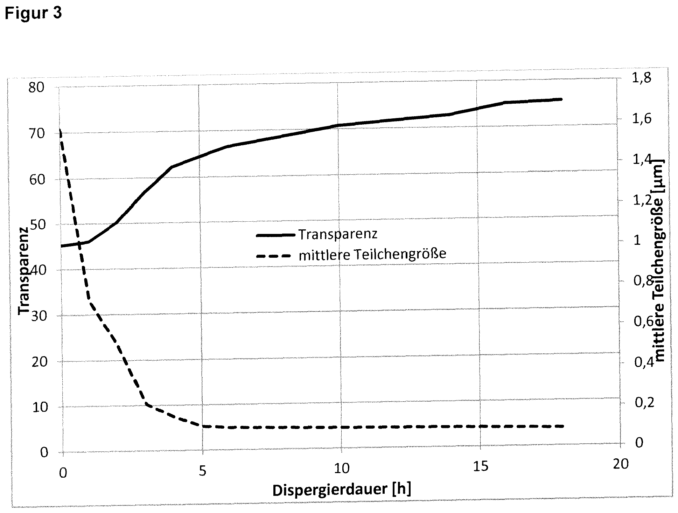

Figur 3 zeigt die Zunahme der Transparenz mit zunehmender Dispergierzeit (Beispiel 1).

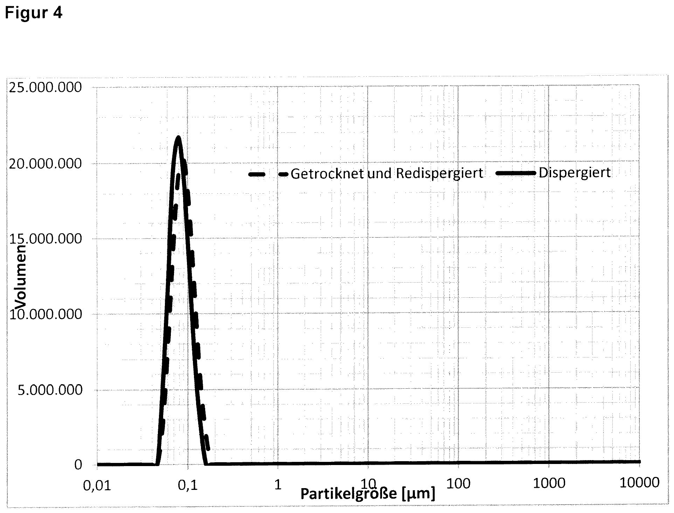

Die dispergierten Suspensionen (Beispiel 1 und 2) wurden anschließend bei 50 bis 70°C etwa 3 Stunden auf eine Feuchte von <1 Gew.-% getrocknet. Das entstandene granulatförmige Material wurde mit 38 Gew.-% Wasser bezogen auf Gesamtfeststoff in einem Rührgefäß mit einem Flügelrührer etwa 5 Minuten gerührt. Die Partikelgrößenverteilung der redispergierten Suspension wurde mit dem Mastersizer 2000 gemessen. Die mittlere Partikelgröße (d50), berechnet aus der volumenbasierten Partikelgrößenverteilung, betrug für beide redispergierten Suspensionen etwa 94 nm. Figur 4 zeigt die Partikelgrößenverteilungen der ursprünglichen und der redispergierten Suspensionen (Beispiel 1 und 2).

## Patentansprüche

1. Wässrige Suspension von nanoskaligen anorganischen Partikeln **dadurch gekennzeichnet, dass**
ein erstes Dispergiermittel auf Basis eines polymeren Alkoxylats und ein zweites Dispergiermittel aus der Gruppe der Aminoalkohole enthalten sind,
wobei das polymere Alkoxylat das Salz eines alkalischen (Poly-)Alkohols ist und Phosphat-funktionalisiert ist.

2. Wässrige Suspension nach Anspruch 1 **dadurch gekennzeichnet, dass** als nanoskalige anorganische Partikel Titandioxid eingesetzt wird.

3. Wässrige Suspension nach Anspruch 1 oder 2 **dadurch gekennzeichnet, dass** die Partikel-Konzentration bis zu 70 Gew.-%, bevorzugt 30 bis 60 Gew.-% und insbesondere 40 bis 50 Gew.-% beträgt.

4. Wässrige Suspension nach einem oder mehreren der Ansprüche 1 bis 3 **dadurch gekennzeichnet, dass**
die Suspension einer thermischen Behandlung unterzogen wird.

5. Wässrige Suspension nach Anspruch 4 **dadurch gekennzeichnet, dass**
die Feuchte nach der thermischen Behandlung <5 Gew.-%, bevorzugt <1 Gew.-% beträgt.

6. Verfahren zur Herstellung einer wässrigen Suspension von nanoskaligen anorganischen Partikeln **dadurch gekennzeichnet, dass**
ein erstes Dispergiermittel auf Basis eines polymeren Phosphat-funktionalisierten Alkoxylats und ein zweites Dispergiermittel aus der Gruppe der Aminoalkohole eingesetzt werden.

7. Verfahren nach Anspruch 6 **dadurch gekennzeichnet, dass**
als nanoskalige anorganische Partikel Titandioxid eingesetzt wird.

8. Verfahren nach Anspruch 6 oder 7 **dadurch gekennzeichnet, dass**
in einem ersten Schritt mit einem Dissolver vordispergiert wird.

9. Verfahren nach einem oder mehreren der Ansprüche 6 bis 8 **dadurch**
**gekennzeichnet, dass**
in einer Rührwerkskugelmühle dispergiert wird.

10. Verfahren nach einem oder mehreren der Ansprüche 6 bis 9 **dadurch**
**gekennzeichnet, dass**
eine Partikel-Konzentration von bis zu 70 Gew.-%, bevorzugt 30 bis 60 Gew.-% und insbesondere 40 bis 50 Gew.-% eingestellt wird.

11. Verfahren nach einem oder mehreren der Ansprüche 6 bis 10 **dadurch**
**gekennzeichnet, dass**
die Dispergiermittel in einer Gesamtmenge von 3 bis 40 Gew.-% bezogen auf Nanopartikel zugesetzt werden.

12. Verfahren nach einem oder mehreren der Ansprüche 6 bis 11 **dadurch**
**gekennzeichnet, dass**
anschließend der Wassergehalt der Suspension durch thermische Behandlung auf <5 Gew.-% bevorzugt <1 Gew.-% gesenkt wird.

13. Verfahren nach Anspruch 12 **dadurch gekennzeichnet, dass**
die thermisch behandelte Suspension anschließend in Wasser redispergiert wird.

14. Verfahren nach einem oder mehreren der Ansprüche 6 bis 13 **dadurch**
**gekennzeichnet, dass**
die Mahlkugeln einen Durchmesser von etwa 0,1 bis 1,0 mm, bevorzugt 0,1 bis 0,6 mm und insbesondere 0,1 bis 0,4 mm aufweisen.

15. Verwendung der Suspension nach einem oder mehreren der Ansprüche 1 bis 14 als Beschichtung oder Imprägnierung von anorganischen oder organischen Oberflächen und als Additiv in organischen oder anorganischen Matrizes wie Lack- und Kunststoffsystemen oder zementären Systemen.

## Claims

1. Aqueous suspension of nanoscale inorganic particles, **characterised in that**
a first dispersant based on a polymeric alkoxylate and a second dispersant selected from the group of amino alcohols are comprised whereby the polymeric alkoxylate is the salt of an alkaline (poly-)alcohol and functionalized with phosphate.

2. Aqueous suspension according to Claim 1, **characterised in that**
titanium dioxide is used as the nanoscale inorganic particles.

3. Aqueous suspension according to Claim 1 or 2, **characterised in that**
the particle concentration is up to 70% by weight, preferably 30 to 60% by weight and particularly 40 to 50% by weight.

4. Aqueous suspension according to one or more of Claims 1 to 3, **characterised in that** the suspension is subjected to thermal treatment.

5. Aqueous suspension according to Claim 4, **characterised in that**
the moisture content following thermal treatment is < 5% by weight, preferably <1 % by weight.

6. Method for producing an aqueous suspension of nanoscale inorganic particles, **characterised in that**
a first dispersant based on a polymeric alkoxylate functionalized with phosphate and a second dispersant selected from the group of amino alcohols are used.

7. Method according to Claim 6, **characterised in that**
titanium dioxide is used as the nanoscale inorganic particles.

8. Method according to Claim 6 or 7, **characterised in that**
predispersion with a dissolver is performed in a first step.

9. Method according to one or more of Claims 6 to 8, **characterised in that**
dispersion is performed in an attrition mill.

10. Method according to one or more of Claims 6 to 9, **characterised in that**
a particle concentration of up to 70% by weight, preferably 30 to 60% by weight and particularly 40 to 50% by weight is set.

11. Method according to one or more of Claims 6 to 10, **characterised in that**
the dispersant is added in a total quantity of 3 to 40% by weight related to nano particles.

12. Method according to one or more of Claims 6 to 11, **characterised in that**
the water content of the suspension is subsequently reduced to 5% by weight, preferably < 1% by weight by thermal treatment.

13. Method according to Claim 12, **characterised in that**
the thermally treated suspension is subsequently redispersed in water.

14. Method according to one or more of Claims 6 to 13, **characterised in that**
the grinding beads have a diameter of roughly 0.1 to 1.0 mm, preferably 0.1 to 0.6 mm and particularly to 0.1 to 0.4 mm.

15. Use of the suspension according to one or more of Claims 1 to 14
as a coating or impregnation for inorganic or organic surfaces, and as an additive in organic or inorganic matrices, such as paint and plastic systems or cement systems.

## Revendications

1. Suspension aqueuse de nanoparticules inorganiques, **caractérisée en ce qu'**un premier agent de dispersion à base d'un alcoxylate polymère et un deuxième agent de dispersion du groupe des amino-alcools y sont contenus, où l'alcoxylate polymère est le sel d'un (poly)alcool alcalin et est fonctionnalisé par un phosphate:

2. Suspension aqueuse selon la revendication 1, **caractérisée en ce que** du dioxyde de titane est employé en tant que nanoparticule inorganique.

3. Suspension aqueuse selon la revendication 1 ou 2, **caractérisée en ce que** la concentration des particules s'élève jusqu'à 70 % en poids, de préférence de 30 à 60 % en poids, et en particulier de 40 à 50 % en poids.

4. Suspension aqueuse selon une ou plusieurs des revendications 1 à 3, **caractérisée en ce que** la suspension est soumise à un traitement thermique.

5. Suspension aqueuse selon la revendication 4, **caractérisée en ce que** l'humidité après le traitement thermique est < 5 % en poids, de préférence < 1 % en poids.

6. Procédé de fabrication d'une suspension aqueuse de nanoparticules inorganiques, **caractérisé en ce qu'**un premier agent de dispersion à base d'un alcoxylate polymère fonctionnalisé par un phosphate et un deuxième agent de dispersion du groupe des amino-alcools sont employés.

7. Procédé selon la revendication 6, **caractérisé en ce que** du dioxyde de titane est employé en tant que nanoparticule inorganique.

8. Procédé selon la revendication 6 ou 7, **caractérisé en ce que**, dans une première étape, une dispersion préalable est effectuée avec un dissolvant.

9. Procédé selon une ou plusieurs des revendications 6 à 8, **caractérisé en ce que** la dispersion est effectuée dans un broyeur à boulets avec agitateur.

10. Procédé selon une ou plusieurs des revendications 6 à 9, **caractérisé en ce qu'**une concentration des particules jusqu'à 70 % en poids, de préférence de 30 à 60 % en poids et notamment de 40 à 50 % en poids est préréglée.

11. Procédé selon une ou plusieurs des revendications 6 à 10, **caractérisé en ce que** les agents de dispersion sont ajoutés en une quantité totale de 3 à 40 % en poids par rapport aux nanoparticules.

12. Procédé selon une ou plusieurs des revendications 6 à 11, **caractérisé en ce que** par la suite la teneur en eau de la suspension est réduite par un traitement thermique à < 5 % en poids, de préférence à < 1 % en poids.

13. Procédé selon la revendication 12, **caractérisé en ce que** la suspension traitée thermiquement est ensuite redispersée dans de l'eau.

14. Procédé selon une ou plusieurs des revendications 6 à 13, **caractérisé en ce que** les boulets de broyage présentent un diamètre d'environ 0,1 à 1,0 mm, de préférence de 0,1 à 0,6 mm et notamment de 0,1 à 0,4 mm.

15. Utilisation de la suspension selon une ou plusieurs des revendications 1 à 14 en tant que revêtement ou imprégnation de surfaces inorganiques ou organiques et en tant qu'additif dans des matrices organiques ou inorganiques comme des systèmes de laque ou de matières plastiques ou des systèmes à base de cimentaires.
